**Europäisches Patentamt**

**European Patent Office**

**Office européen des brevets**

(19)

(11) Veröffentlichungsnummer: **0 256 491**
**B1**

(12) # EUROPÄISCHE PATENTSCHRIFT

(45) Veröffentlichungstag der Patentschrift:
19.09.90

(51) Int. Cl.⁵: **B01D 45/16, B04C 5/28**

(21) Anmeldenummer: **87111599.4**

(22) Anmeldetag: **11.08.87**

(54) Fliehkraftstaubabscheider mit einer Mehrzahl von Zyklonen.

(30) Priorität: **13.08.86 DE 3627539**

(43) Veröffentlichungstag der Anmeldung:
**24.02.88 Patentblatt 88/8**

(45) Bekanntmachung des Hinweises auf die Patenterteilung:
**19.09.90 Patentblatt 90/38**

(84) Benannte Vertragsstaaten:
**DE FR GB IT**

(56) Entgegenhaltungen:
**DE-A- 1 507 842**
**DE-A- 3 203 498**
**DE-A- 3 239 109**
**DE-B- 1 058 470**
**US-A- 2 671 560**

(73) Patentinhaber: **Anton Piller GmbH & Co. KG, Abgunst 24,
D-3360 Osterode/Harz(DE)**

(72) Erfinder: **Müller, Friedrich-Ernst, Dipl.-Ing., Willenser
Strasse 2a, D-3363 Eisdorf(DE)**

(74) Vertreter: **Gralfs, Harro, Dipl.-Ing., Am Bürgerpark 8,
D-3300 Braunschweig(DE)**

ACTORUM AG

**Beschreibung**

Die Erfindung bezieht sich auf einen Fliehkraftstaubabscheider mit einer Mehrzahl von Zyklonen nach dem Oberbegriff des Patentanspruches 1.

Bei einem bekannten Fliehkraftstaubabscheider der genannten Art (DE-B 15 07 842) sind in der Luftzuführkammer gesonderte Zyklone angeordnet, die mit ihrem Konusauslaß durch in einem Raster ausgebildete Öffnungen in einer ebenen Wand des Luftzuführgehäuses hindurchgreifen und innen auf dieser Wand abgedichtet sind. Das Staubsammelgehäuse ist dabei wie die Reinluftsammelkammer mit der Luftzuführkammer über Flansche verbunden.

Diese bekannten Staubabscheider haben bereits ein relativ kleines Einbauvolumen und erfüllen damit Anforderungen an eine möglichst kompakte Bauweise, wie sie bei Verwendung derartiger Staubabscheider in Fahrzeugen mit begrenztem Raum für die Unterbringung solcher Staubabscheider gefordert wird.

Bei Mehrfachhydrozyklonen ist es bekannt, in gegossenen Gehäusen im Guß die Innenkonturen der Zyklone auszubilden. Dies erfolgt bei einem Mehrfachhydrozyklon, wie er in der US-A 2 671 560 beschrieben ist, in einem gegossenen zylinderringförmigen Einsatzteil, das in ein äußeres Gehäuses einsetzbar ist. Die Zufuhr der Rohflüssigkeit erfolgt hier achsparallel zu den Zyklonen. Eine stufenweise Abscheidung ist hierbei dadurch erreichbar, daß eine Mehrzahl von Zyklonen übereinander angeordnet ist, wobei die in der ersten Stufe vorgereinigte Flüssigkeit der zweiten gleich oder ähnlich ausgebildeten Stufe zugeführt wird.

Bei einem weiteren Hydrozyklon, wie er in der DE-A 10 58 470 beschrieben ist, sind die Innenkonturen der Zyklone gleichfalls im Guß eines Gußgehäuses ausgebildet. Angegossen ist hier eine Einlaßkammer für die Flüssigkeit, eine Auslaßkammer für die gereinigte Flüssigkeit und eine Auslaßkammer für die in den Zyklonen abgeschiedene Materie. Die Zyklone sind dabei konisch geneigt zentrisch um die Gehäuseachse angeordnet. Derartige Hydrozyklone erfordern komplizierte Gußteile.

Es ist weiter aus der DE-A 32 03 498 ein Wirbelkammerfilter bekannt, bei dem eine Mehrzahl in Reihe und auch parallel geschalteter Wirbelkammern als Filtereinheit in einem gegossenen Gehäuse ausgebildet sind. Von diesen Filtereinheiten, die eine bestimmte Kapazität haben, wird zur Vervielfachung dieser Kapazität eine entsprechende Mehrzahl parallel zueinander in einem Gehäuse angeordnet werden, das mit einer Luftzuführkammer und einer Staubsammelkammer versehen ist, die an das Grundgehäuse angeflanscht sind und mit Öffnungen versehen sind, die im wesentlichen koaxial zueinander liegen. Die Reinluftauslässe der einzelnen Filter münden hierbei in eine Reinluftsammelkammer, in der die Filterelemente angeordnet sind und die mit einem Reinluftauslaßstutzen versehen ist.

Aufgabe der Erfindung ist es, einen Fliehkraftstaubabscheider der im Oberbegriff des unabhängigen Patentanspruches 1 definierten Art so auszubilden, daß mit ihm durch Parallelschaltung gestufte Kapazitäten wählbar sind, wobei für unterschiedliche Kapazitäten jeweils nur ein der jeweiligen Kapazität anzupassendes Bauelement vorgesehen werden muß.

Diese Aufgabe wird gemäß der Erfindung gelöst durch einen Fliehkraftstaubabscheider mit den Merkmalen des unabhängigen Patentanspruches.

Zweckmäßige Ausgestaltungen und Weiterbildungen der Erfindung sind Gegenstand der abhängigen Ansprüche.

Die Erfindung ist in der Zeichnung beispielsweise veranschaulicht und nachstehend im einzelnen anhand der Zeichnung beschrieben.

Fig. 1 zeigt schematisch in isometrischer Darstellung teilweise geschnitten einen Gehäuseblock eines Fliehkraftstaubabscheiders.

Fig. 2 zeigt in Seitenansicht einen Fliehkraftstaubabscheider in einer ersten Ausführungsform, teilweise im Schnitt.

Fig. 3 zeigt einen Schnitt längs der Linie III-III in Fig. 2.

Fig. 4 zeigt teilweise geschnitten einen Staubabscheider mit einer Mehrzahl von Gehäuseeinheiten.

Fig. 5 zeigt den Staubabscheider nach Fig. 4 in Draufsicht auf die in Fig. 4 oben liegende Seite und teilweise im Schnitt längs der Linie V-V in Fig. 4.

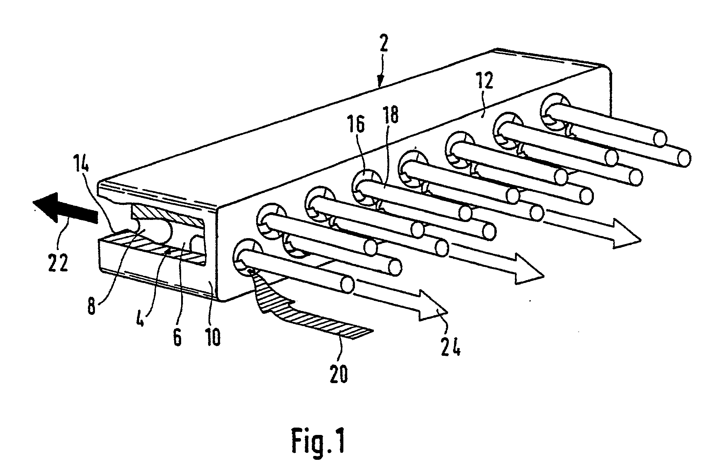

Fig. 1 zeigt schematisch eine Gehäuseeinheit 2 eines Fliehkraftstaubabscheiders mit einer Mehrzahl von Zyklonen 4. Die Gehäuse der Zyklone mit ihrem zylindrischen Teil 6 und ihrem konischen Teil 8 sind in einem Gehäuse 10 eingegossen, das hier quaderförmig ausgebildet ist und an der in der Zeichnung vorn liegenden Wandfläche 12 mit den Einlaßenden der Zyklongehäuse und an der gegenüberliegenden Gehäusewand 14 mit den Auslässen der konischen Abschnitte 8 ausgebildet sind. In die Zyklongehäuse sind in üblicher Weise Drallkörper 16 sowie Reingasauslaßrohre 18 eingesetzt. In die Zyklone tritt in üblicher Weise Rohluft entsprechend dem Pfeil 20 ein, während gegenüber aus dem Zyklongehäuse mit Staub angereicherte Luft entsprechend dem Pfeil 22 austritt. Aus den Reinluftauslaßrohren tritt entsprechend den Pfeilen 24 die Reinluft aus.

Bei dem dargestellten Gehäuse sind übereinander zwei Reihen von Zyklongehäusen 4 angeordnet. Die Zyklongehäuse liegen in den beiden übereinanderliegenden Reihen eine halbe Teilung versetzt, und der Abstand senkrecht zu den Reihen ist so gewählt, daß die Zyklongehäuse jeweils ineinander verschachtelt liegen. Das Gehäuse 10, in das eine Vielzahl von Zyklongehäusen 4 eingegossen ist, wirkt auf der Lufteinlaßseite mit einer Lufteinlaßkammer und auf der Staubluftauslaßseite mit einer Staubluftsammelkammer zusammen, während die Reinluftauslaßrohre 18 durch eine Trennwand in eine Reinluftsammel- bzw. -auslaßkammer geführt sind. Das Gehäuse kann in seinen Außenkonturen so gestaltet sein, daß jeweils für die Zyklongehäuse eine Mindestwandstärke gegeben ist. Das gleiche gilt für die Wandungen zwischen den einzelnen Zyklongehäusen. Das Gehäuse 10 kann dabei auf seinen Breitseiten gewellt sein. In einer Gehäuseeinheit 2 können auch mehr als zwei Reihen von Zyklongehäusen übereinander angeordnet sein. Um eine Modulbauweise zu ermöglichen, mit der eine Kapazitätsanpassung an die jeweils geforderten Durchsätze in einfacher Weise möglich ist, ist es jedoch zweckmäßig, Gehäuseeinheiten mit zwei Reihen von Zyklongehäusen zu verwenden. Für das im Querschnitt durch die Zyklone im wesentlichen rechteckförmige Gehäuse wird ein Seitenverhältnis von wenigstens 4 : 1 verwendet.

Wie ohne weiteres ersichtlich, kann die Gehäuseeinheit 2 auch gekrümmt und, wie weiter unten zu beschreiben, sogar ringförmig ausgebildet sein, jeweils entsprechend den Einbauerfordernissen.

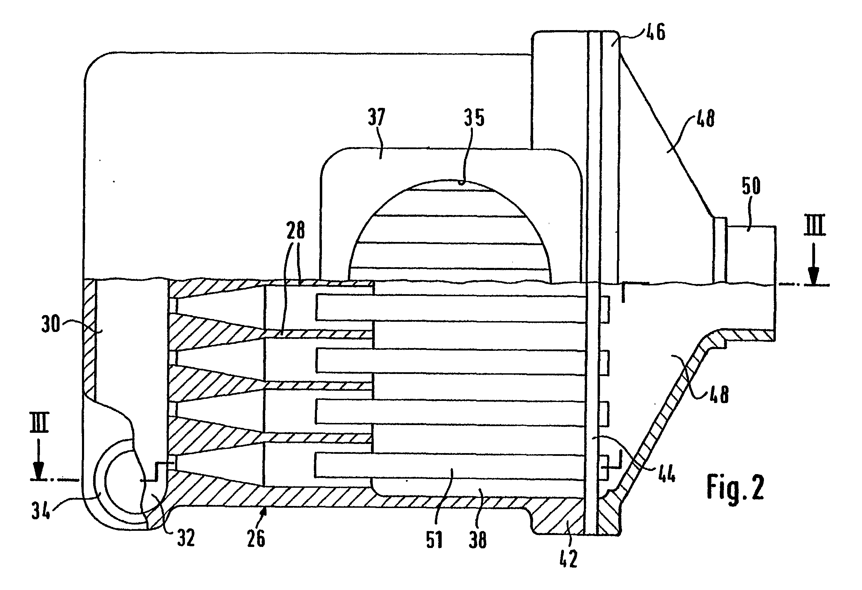

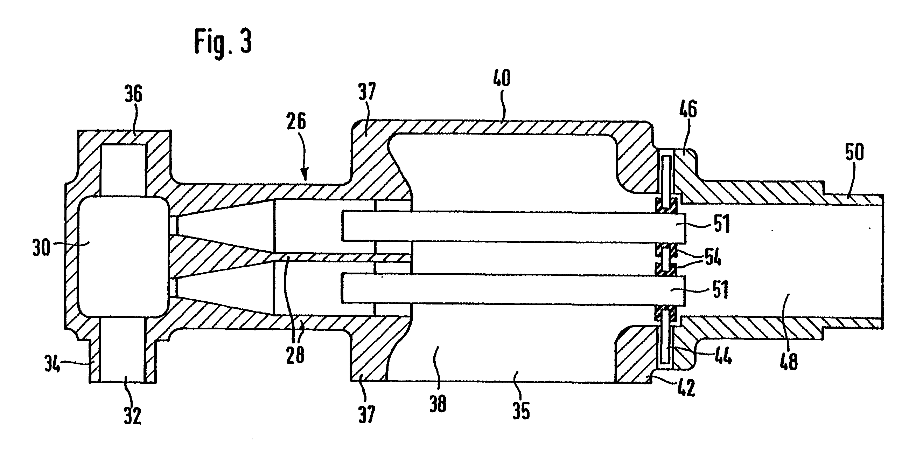

Bei der Ausführungsform nach den Fig. 2 und 3 ist eine Gehäuseeinheit 26 vorgesehen, die hier im wesentlichen entsprechend dem Prinzip nach Fig. 1 ausgebildet ist. Die Zyklongehäuse 28 der beiden übereinanderliegenden Reihen sind hier jeweils senkrecht übereinander angeordnet. An das Grundgehäuse mit den Zyklongehäusen 28 ist eine Staubsammelkammer 30 angegossen, die senkrecht zur Ebene der beiden Reihen von Zyklongehäusen mit Auslaßstutzen 32 versehen ist, die miteinander fluchten und außen mit einer Aufnahme 34 für einen Schlauchanschluß oder dergleichen versehen sein kann. Bei der Ausführung nach Fig. 2 und 3 wird nur einer der beiden Auslaßstutzen 32 benötigt. Der andere Stutzen kann abgeschlossen sein, beispielsweise mit einem angegossenen Verschlußdeckel 36 versehen sein. Auf die Bedeutung dieses zweiten, hier abgeschlossenen Stutzens wird hier weiter unten eingegangen.

An das Zyklongehäuse 26 ist weiter eine Luftzufuhrkammer 38 angegossen, die hier parallel zu den beiden Stutzen 32 der Staubsammelkammer 30, das ist wiederum senkrecht zur Ebene der beiden parallelen Reihen von Zyklongehäusen mit Lufteinlaßöffnungen 35 mit Flanschen 37 versehen ist, von denen hier wiederum der in Fig. 3 oben liegende Flansch durch eine ein- bzw. angegossene Wand 40 verschlossen sein kann. An der den Zykloneinlässen abgewandten Seite der Luftzuführkammer 38 ist ein Flansch 42 vorgesehen, an dem eine plattenförmige Trennwand 44 anliegt, die hier zwischen dem Flansch 42 und dem Anschlußflansch 46 des Gehäuses 47 einer Reinluftsammelkammer 48 eingeklemmt ist, das seinerseits wiederum mit einem Reinluftauslaßstutzen 50 versehen ist. In der plattenförmigen Trennwand 44 sind die Enden der Reinluftauslaßrohre 51 durch Dichtungen 54 hindurchgeführt, mit denen sie gleichzeitig in Öffnungen der Trennwand 44 gehaltert sind.

Ein Staubabscheider gemäß Fig. 3 wird in üblicher Weise an eine Rohlufteinlaßleitung, eine Staubluftauslaßleitung und eine Reinluftabführleitung angeschlossen, wobei die Rohluft unter Druck, d.h. gefördert durch ein Druckgebläse, zugeführt werden kann. Es kann aber auch ein Sauggebläse an den Auslaß der Staubsammelkammer angeschlossen werden, ebenso an den Auslaß der Reinluftsammelkammer, wie dies bei Fliehkraftstaubabscheidern mit einer Mehrzahl von Zyklonen üblich ist. Bei Verwendung zur Abscheidung von Radioaktivität enthaltenden Stäuben sollte der Staubluftauslaßstutzen an der tiefsten Stelle angeordnet sein, wobei die Einbauweise dann hochkant erfolgen würde, wie in Fig. 2 dargestellt.

Durch die Verwendung von kleinen Gehäusedurchmessern für die Zyklone, und zwar kleiner 25 mm, wird, wie oben erwähnt, der Abscheidegrad der Zyklone beispielsweise gegenüber Zyklonen mit Gehäusedurchmessern von 40 mm dadurch wesentlich verbessert, daß damit auch eine feinere Kornfraktion abgeschieden werden kann.

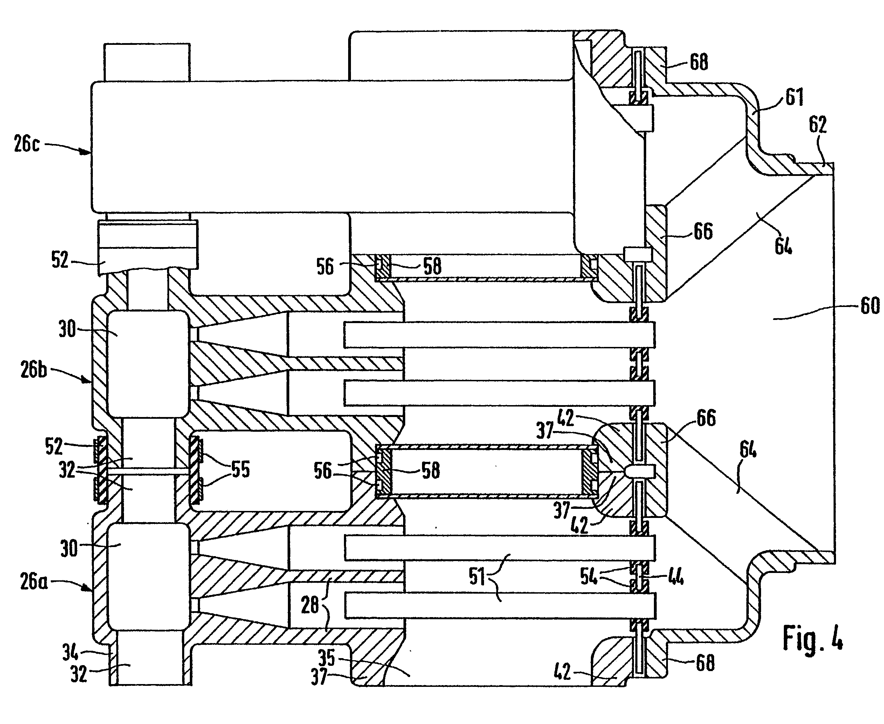

In Fig. 4 ist ein Fliehkraftstaubabscheider dargestellt, der aus einer Mehrzahl von Einheiten oder Moduln 26a bis 26c zusammengesetzt ist, wei sie in Fig. 2 und 3 dargestellt sind. Auf Einzelheiten dieser Module braucht daher hier nicht eingegangen zu werden. Die Module sind so aufeinandergesetzt, daß die Staubluftauslaßstutzen 32 und die Einlaßöffnungen 35 aller Module miteinander fluchten. Auf Auslaßstutzen 32 aneinandergrenzende Module 26a bis 26b, 26b bis 26c sind Verbindungsschläuche 52 aufgesetzt, die auf den angrenzenden Stutzen 32 jeweils durch Schlauchschellen 54 festgelegt sind.

In Fig. 4 liegt die Lufteinlaßöffnung 35 unten. Sie kann mit einem Flansch 37 ausgebildet sein, wie in Fig. 3 dargestellt.

Die Flansche 37 der Module 26a bis 26c, die einander gegenüberliegen, sind mit zylindrischen Ausdrehungen 56 versehen. Der Flansch 37 der Einlaßöffnung 35 des dritten Moduls 26c kann wiederum mit einem angegossenen Deckel verschlossen sein. Es kann hier aber auch eine Platte als Abschluß vorgesehen werden. In die zylindrischen Ausdrehungen 56 benachbarter Module ist jeweils ein Verbindungsring 58 abdichtend eingesetzt.

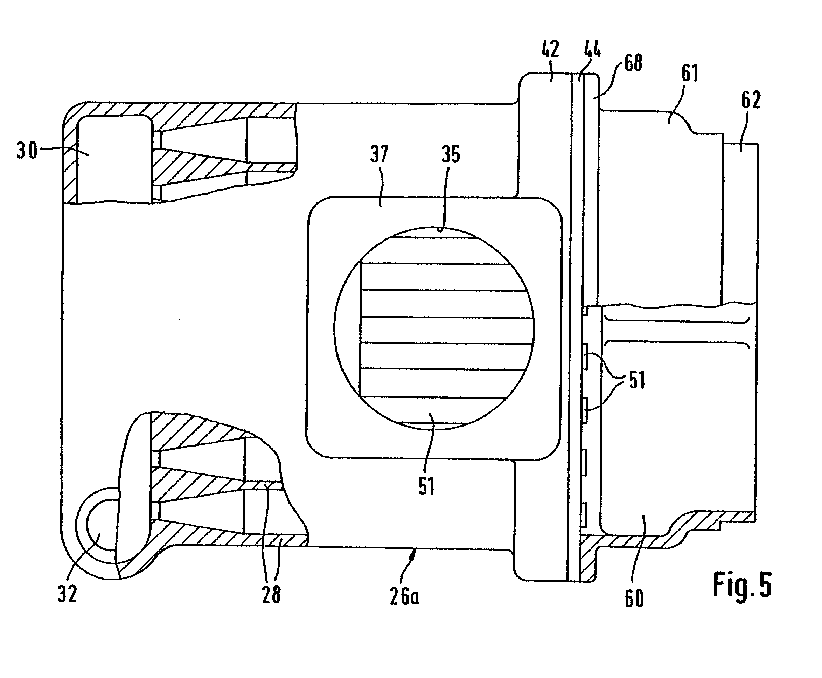

Für den in der beschriebenen Weise aus drei Moduln 26a bis 26c zusammengesetzen Fliehkraftstaubabscheider ist eine hieran angepaßte Reinluftsammelkammer 60 mit einem Gehäuse 61 mit Auslaßstutzen 62 vorgesehen. In diesem Gehäuse 61 der Reinluftsammelkammer sind über Stege 64 gehalten Flansche 66 angeordnet, die jeweils mit den Flanschen 42 der Module 26a bis 26c zusammenwirken, dabei diese abdichten und über die gleichzeitig die Module an der Reinluftsammelkammer 60 befestigt sind. Die Module werden hier also vom Gehäuse 61 der Reinluftsammelkammer zusammengehalten und getragen. Jedes der Module hat zwischen den angrenzenden Flanschen 37 und den zugehörigen Flanschen 66, 68 des Gehäuses 61 der Reinluftsammelkammer die plattenförmigen Trennwände 44 abdichtend eingespannt, durch die die Reinluftauslaßrohre 51 abdichtend hindurch in die Reinluftsammelkammer 60 geführt sein. Auch ein aus mehreren Moduln zusammengesetzter Fliehkraftstaubabscheider nach Fig. 4 und 5 sollte so eingebaut werden, daß der Staubluftauslaßstutzen 32 an der tiefsten Stelle der Staubluftsammelkammer angeordnet ist, also beispielsweise in der Weise, wie in Fig. 5 dargestellt.

In gleicher Weise wie die in Fig. 4 und 5 dargestellt Einheit mit drei Modulen können auch Einheiten mit vier und mehr Modulen zusammengestellt werden. Es ist dabei jeweils lediglich ein angepaßtes Reinluftauslaßgehäuse vorzusehen.

## Patentansprüche

1. Fliehkraftstaubabscheider mit einer Mehrzahl von Zyklonen (4), die nebeneinander achsparallel in einem Gehäuse (2, 26) angeordnet sind, das im wesentlichen quaderförmig und im Querschnitt durch die Zyklone im wesentlichen rechteckförmig ausgebildet ist, mit einer Staubsammelkammer (30), in der die Staubaustragsöffnungen der Zyklone münden, mit einer Luftzuführkammer (38) mit quer zur Achse der Zyklone liegender Lufteinlaßöffnung (35) und mit einer Reinluftsammelkammer (48) an der den Einlässen der Zyklone gegenüberliegenden Seite der Luftzuführkammer, die von der Luftzuführkammer durch eine plattenförmige Wand (44) getrennt ist, in der die Auslaßenden der Luftauslaßrohre (51) der Zyklone abdichtend gehaltert sind und die zwischen Flanschen (42, 46) der Luftzuführkammer (38) einerseits und der Reinluftsammelkammer (48) andererseits dichtend gehaltert ist, gekennzeichnet durch ein gegossenes Gehäuse (2, 26), dessen im wesentlichen rechteckförmiger Querschnitt ein Seitenverhältnis von wenigstens 4:1 aufweist,
in dem im Guß mehrreihig die Innenkonturen der Zyklone ausgebildet sind,
an das an die Staubaustragsöffnungen der Zyklone angrenzend die Staubsammelkammer (30) angegossen ist, die in den Breitseiten des Gehäuses mit zwei gegenüberliegenden, miteinander fluchtenden Auslaßstutzen (32) versehen ist und
an das an die Lufteinlaßöffnungen der Zyklone angrenzend die Luftzuführkammer (38) angegossen ist, die in den Breitseiten mit zwei gegenüberliegenden, miteinander fluchtenden Einlaßöffnungen (35) versehen ist.

2. Fliehkraftstaubabscheider nach Anspruch 1, dadurch gekennzeichnet, daß die Einlaßöffnungen (35) der Luftzuführkammer (38) mit angegossenen Flanschen (37) ausgebildet sind.

3. Fliehkraftstaubabscheider nach Anspruch 1 oder 2, dadurch gekennzeichnet, daß die Einlaßöffnungen (35) der Luftzuführkammer (38) zylindrisch zur Aufnahme von Verbindungsringen (58) ausgebildet sind.

4. Fliehkraftstaubabscheider nach Anspruch 1, dadurch gekennzeichnet, daß die Auslaßstutzen (32) der Staubsammelkammer (30) als Schlauchanschlußstutzen ausgebildet sind.

5. Fliehkraftstaubabscheider nach Anspruch 1, dadurch gekennzeichnet, daß die Auslaßstutzen (32) der Staubsammelkammer (30) an einem Ende der Staubsammelkammer angeordnet sind.

6. Fliehkraftstaubabscheider nach Anspruch 1, dadurch gekennzeichnet, daß die Zyklone einen Gehäuseinnendurchmesser kleiner als 25 mm haben.

7. Fliehkraftstaubabscheider nach Anspruch 1, dadurch gekennzeichnet, daß eine Mehrzahl von Gehäusen (26a–c) vorgesehen ist, die mit ihren Breitseiten übereinanderliegen und für die eine gemeinsame Reinluftsammelkammer (60) vorgesehen ist, die für jeden Flansch (42) der Gehäuse (26a–c) einen Gegenflansch (66, 68) aufweist.

## Claims

1. A centrifugal dust separator having a plurality of cyclones (4) which are arranged side by side, with their axes parallel, in a housing (2, 26) which is substantially parallelepiped and, in cross-section through the cyclones, substantially rectangular, having a dust collecting chamber (30) into which the dust discharge outlets of the cyclones lead, having an air supply chamber (38) with an air inlet (35) lying transversely to the axis of the cyclones and having a clean-air collecting chamber (48) at the side of the air supply chamber opposite to the inlets of the cyclones and separated from the air supply chamber by a plate-like wall (44) in which the outlet ends of the air outlet pipes (51) of the cyclones are held with a sealing action and which is held with a sealing action between flanges (42, 46) of the air supply chamber (38) on the one hand and of the clean-air collecting chamber (48) on the other hand, characterised by a cast housing (2, 26) of which the substantially rectangular cross-section has a ratio of its sides of at least 4:1,
wherein the internal contours of the cyclones are formed in multiple rows in the casing,
on which the dust collecting chamber (30) is cast adjacent to the dust discharge outlets of the cyclones, which chamber is provided, in the broad sides of the housing, with two opposite outlet sockets 32 aligned with one another, and
on which the air supply chamber (38) is cast adjacent to the air inlets of the cyclones, which chamber is provided, in the broad sides, with two opposite inlets (35) aligned with one another.

2. A centrifugal dust separator according to Claim 1, characterised in that the inlets (35) of the air supply chamber (38) are constructed with cast-on flanges (37).

3. A centrifugal dust separator according to Claim 1 or 2, characterised in that the inlets (35) of the air supply chamber (38) are made cylindrical to receive connecting rings (58).

4. A centrifugal dust separator according to Claim 1, characterised in that the outlet sockets (32) of the dust collecting chamber (30) are constructed in the form of hose connection sockets.

5. A centrifugal dust separator according to Claim 1, characterised in that the outlet sockets (32) of the dust collecting chamber (30) are disposed at one end of the dust collecting chamber.

6. A centrifugal dust separator according to Claim 1, characterised in that the cyclones have an internal housing diameter of less than 25 mm.

7. A centrifugal dust separator according to Claim 1, characterised in that a plurality of housings (26a–c) are provided which lie with their broad sides one above the other and for which a common clean-air collecting chamber (60) is provided which has a counterflange (66, 68) for each flange (42) of the housings (26a–c).

## Revendications

1. Dépoussiéreur centrifuge à plusieurs cyclones (4), dont les axes sont parallèles et qui sont placés côte à côte dans un bâti (2, 26), lequel est pour l'essentiel parallélépipédique et rectangulaire pour l'essentiel dans sa section transversale en travers des cyclones, dépoussiéreur comportant une chambre collectrice de poussière (30), dans laquelle les ouvertures d'évacuation de poussière des cyclones débouchent, comportant une chambre d'amenée d'air (38), dont l'ouverture d'entrée (35) est transversale à l'axe des cyclones et comportant, du côté de la chambre d'amenée d'air opposé aux entrées de cyclones, une chambre collectrice d'air pur (48), qui est séparée de la chambre d'amenée d'air par une paroi plate (44), dans laquelle les extrémités des tuyaux de sortie d'air (51) des cyclones sont maintenues de manière étanche et qui est serrée entre les brides (42, 46) de la chambre d'amenée d'air (38) d'une part et la chambre collectrice d'air pur (48) d'autre part, caractérisé par un bâti coulé (2, 26), dont la section transversale pour l'essentiel rectangulaire présente pour ses côtés un rapport d'au moins 4:1,
dans lequel les contours internes des cyclones sont coulés sur plusieurs rangées,
contre lequel est coulée faisant corps la chambre collectrice de poussière (30), qui, contiguë aux ouvertures d'évacuation de poussière des cyclones, est pourvue dans les côtés plats du bâti de deux manchons de sortie opposés et alignés entre eux (32) et
contre lequel est coulée faisant corps la chambre d'amenée d'air (38), qui contiguë aux ouvertures d'entrée d'air des cyclones, est pourvue dans les côtés plats de deux ouvertures d'entrée (35) opposées et alignées entre elles.

2. Dépoussiéreur centrifuge selon la revendication 1, caractérisé en ce que les ouvertures d'entrée (35) de la chambre d'amenée d'air (38) ont des brides coulées faisant corps (37).

3. Dépoussiéreur centrifuge selon la revendication 1 ou 2, caractérisé en ce que les ouvertures d'entrée (35) de la chambre d'amenée d'air (38) sont cylindriques pour y loger des anneaux de connexion (58).

4. Dépoussiéreur centrifuge selon la revendication 1, caractérisé en ce que les manchons de sortie (32) de la chambre collectrice de poussière (30) est un manchon de raccordement souple.

5. Dépoussiéreur centrifuge selon la revendication 1, caractérisé en ce que les manchons de sortie (32) de la chambre collectrice de poussière (30) sont placés à une extrémité de celle-ci.

6. Dépoussiéreur centrifuge selon la revendication 1, caractérisé en ce que le diamètre interne des carters de cyclones est inférieur à 25 mm.

7. Dépoussiéreur centrifuge selon la revendication 1, caractérisé en ce que plusieurs bâtis (26a-c) sont prévus, qui sont superposés par leurs côtés plats et pour lesquels une chambre collectrice d'air pur commune (60) est prévue, laquelle présente pour chaque bride (42) des bâtis (26a-c) une contre-bride (66, 68).

Fig.1

EP 0 256 491 B1

Fig. 2

Fig. 3

Fig. 4

EP 0 256 491 B1

Fig.5

EP 0 256 491 B1